# EUROPEAN PATENT APPLICATION

(11) **EP 2 712 220 A1**
(43) Date of publication of application: **26.03.2014**
(21) Application number: 13185700.5
(22) Date of filing: 24.09.2013
(51) Int. Cl.: H04W 8/20, H04W 12/06

(54) **Telecom smart card, air writing card system and air writing card method**

(30) Priority: 25.09.2012 CN 201210362150
(71) Applicant: Eastcompeace Technology Co. Ltd, Guangdong 519060 (CN)
(72) Inventor: Fei, Linshen, Guangdong 519060 (CN); Huang, Fangtao, Guangdong 519060 (CN); Kong, Chuntao, Guangdong 519060 (CN); Ren, Hengbo, Guangdong 519060 (CN); Tan, Yong, Guangdong 519060 (CN); Min, Hongli, Guangdong 519060 (CN)
(74) Representative: Chaillot, Geneviève

(57) **Abstract**

The present application provides a telecom smart card, an air writing card system and an air writing card method. The telecom smart card is preliminarily written with a KI number and is provided with an IMSI number input module for inputting a smart card IMSI number and a personalized data writing module for receiving and writing smart card personalized data. The writing card method includes sending the number desirable to be opened and the ID number of a blank telecom smart card to a server through a client device by the user; after the server verifies the number, obtaining a personalized data including the IMSI number, preliminarily opening the number and sending the IMSI number to the client device; after the user mounts the blank telecom smart card to a mobile phone, inputting the IMSI number; sending the personalized data to the blank telecom smart card by the server and writing the personalized data by the blank telecom smart card. According to the present application, the air writing card can be achieved in remote areas, and the cost of operation and maintenance of the writing card system is lower, thus it is advantageous in spreading and application of the air writing card system.

## Description

### FIELD OF THE INVENTION

The present application relates to a telecom smart card, and particularly to a telecom smart card that is written based on short message, and an air writing card system and an air writing card method used for writing such telecom smart card.

### BACKGROUND OF THE INVENTION

With the development of mobile communication technology, the use of mobile phones has been very popular, and most of the mobile phones use a removable telecom smart card for communication, such as SIM card, UIM card. The existing SIM card stores a variety of data, including the original data of system written by the SIM card manufacturer, the personalized data written by the telecom operator when the SIM card is sold to users, such as network parameter and user data.

The SIM card manufacturer deliver the blank SIM card in which the original data of system are written to the telecom operator, and when the telecom operator sell the SIM card to users, the personalized data such as network parameter, user data are manually written to the SIM card by using long-range writing card system. Since the personalized data of the SIM card are written manually by the salespeople, the work efficiency of opening an account of SIM card is low, thereby it is disadvantageous in developing the selling operations for the telecom operator.

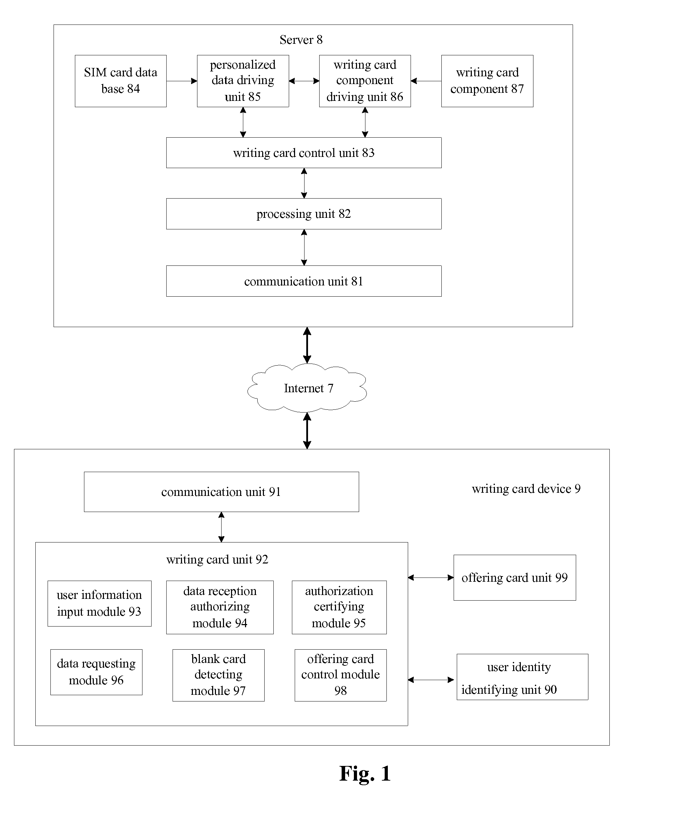

The invention patent application NO. CNl01282528A discloses an invention titled "LONG-RANGE WRITING CARD DECIVE AND WRITING CARD METHOD OF SMART CARD", a block diagram of structure of the writing card system applying the long-range writing card device is shown in Figure 1.

The long-range writing card system includes a server 8 and a writing card device 9, the server 8 and the writing card device 9 are connected through Internet 7. The server 8 is provided with a communication unit 81 used for transmitting data, a processing unit 82, a writing card control unit 83, a SIM card data base 84, a personalized data driving unit 85, a writing card component driving unit 86 and a writing card component base 87. The writing card device 9 has a communication unit 91, a writing card unit 92, a offering card unit 99 and a user identity identifying unit 90, where the writing card unit 92 includes a user information input module 93, a data reception authorizing module 94, a authorization certifying module 95, a data requesting module 96, a blank card detecting module 97, and a offering card control module 98. A smart card reader-writer for reading-writing the blank SIM card is also provided.

During operation of the long-range writing card system, user firstly inputs his or her own identity information to the writing card device 9, the writing card device 9 identifies the user identity through the user identity identifying unit 90 and transmits the user identity information to the user information input module 93, after receiving the user identity information and the information input by user, the user information input module 93 transmits the received information to the server 8 through the communication unit 91. Moreover, the writing card device 9 reads the authorization data stored in the authorization certifying module 95 and transmits the authorization data to the server 8 for verification.

The server 8 verifies the authorization data and sends a verification passing information to the writing card device 9 after the verification is passed. The offering card control module 98 of the writing card device 9 sends a command to the offering card unit 99, so as to deliver the blank SIM card to the smart card reader-writer. Then, the blank card detecting module 97 controls the smart card reader-writer to read the information of the blank SIM card and transmits the read information to the server 8.

After the server 8 verifies and processes the uploaded information, the writing card control unit 83 obtains the personalized data and the writing card component through the SIM card data base 84 and the writing card component base 87, and sends the personalized data and the writing card component to the writing card device 9 through the communication unit 81. Specifically, the personalized data of the SIM card stored in the SIM card data base 84 include IMSI (International Mobile Subscriber Identity) number, ICCID (Integrate Circuit Card Identity) number, PIN code, PIN2 code, PUK code, PUK2 code and so on.

After receiving the writing card component, the data reception authorizing module 94 of the writing card device 9 authorizes the writing card component, and after the writing card component passes the authorization, the offering card control module 98 send a control command to the offering card unit 99, the smart card reader-writer writes the personalized data to the blank SIM card, finally, the SIM card to which the personalized data are written is provide to the user.

Therefore, the existing SIM card has a memory for storing the personalized data, the memory also stores an operating system of the SIM card, all kinds of functional modules are run on the operating system. Of course, the SIM card also has a communication unit used for exchanging information with the wireless network of the telecom operator, so as to achieve communication.

Although the writing card system can achieve long-range writing card and improve the work efficiency of opening an account of the SIM card, it is desirable for the writing card system to be provided with a long-range writing card device, so the cost of operation and maintenance of the writing card system is higher. Furthermore, it is desirable for the writing card device and the server to be connected through a wired network, for the remote areas without laying the wired network, long-range writing card cannot be carried out by using the writing card system, thereby it is disadvantageous in spreading and application of the writing card system.

### SUMMARY OF THE INVENTION

A main object of the present application is to provide a telecom smart card which can facilitate writing card in remote areas.

Another object of the present application is to provide an air writing card system, the cost of operation and maintenance of which is lower.

Further another object of the present application is to provide an air writing card method, the writing card security of which is higher.

In order to achieve the above main object, the telecom smart card provided by the present application includes a communication unit, wherein the telecom smart card further includes a writing card control unit exchanging information with the communication unit, the writing card control unit includes: an IMSI number input module for receiving an IMSI number of the telecom smart card; a personalized data writing module for receiving personalized data and writing the personalized data to the telecom smart card; and an activation module for sending an activation information to the communication unit according to the IMSI number input by the IMSI number input module.

As can be seen from the above solution, the telecom smart card is provided with the writing card control unit, and the personalized data writing module is provided in the writing card control unit, in this way, the telecom smart card may receive the personalized data sent by the server through the communication unit and write the personalized data to the telecom smart card, thereby achieving the writing card operation. Therefore, the writing card operation of the telecom smart card can be achieved without a writing card device, and it is only desirable to achieve a wireless network connection between the server and the telecom smart card, thus the writing card operation of the telecom smart card can be achieved as well in remote areas without laying wired network.

In order to achieve the above another object, the air writing card system provided by the present application has: a server; a system management device communicating with the server; a client device exchanging information with the server through a network; and a mobile phone exchanging information with the server through a wireless network and carrying the telecom smart card, the server including: a communication unit; an air writing card control unit exchanging information with the communication unit; a personalized data base storing telecom smart card personalized data, wherein the personalized data base exchanges information with the air writing card control unit through a personalized data processing unit, and the air writing card control unit receives the personalized data and sends the personalized data; a number data base storing telecom smart card numbers, wherein the number data base exchanges information with the air writing card control unit through a number processing unit; a blank card data base storing blank telecom smart card information, wherein the blank card data base exchanges information with the air writing card control unit through a blank card processing unit; and a number opening unit exchanging information with the air writing card control unit, wherein the number opening unit is applied to open the telecom smart card with the designated number according to the information provided by the blank card processing unit and the personalized data processing unit, and the client device including a communication unit and a number selecting unit exchanging information with the communication unit.

Thus it can be seen that the telecom smart card personalized data stored in the telecom smart card personalized data base of the server are sent to the blank telecom smart card through the communication unit, thus achieving the air writing card of the blank telecom smart card. In this way, when the telecom smart card is offered, the long-range writing card can be achieved without the writing card device, the cost for providing the writing card device can be saved, thereby greatly reducing the operation cost and the maintenance cost of the writing card system of the telecom smart card.

In order to achieve the above further another object, the writing card method applying the above air writing card system provided by the present application includes the following steps:

sending a telecom smart card number desirable to be opened and the ID number of a blank telecom smart card to a server by a client device;

after an air writing card control unit of the server receives the telecom smart card number and the ID number of the blank telecom smart card, querying and verifying the validity of the telecom smart card number and the ID number of the blank telecom smart card to the number data base and the blank card data base;

after the telecom smart card number and the ID number of the blank telecom smart card pass verification, searching a personalized data comprising an IMSI number and the KI number of the blank telecom smart card in telecom smart card personalized data and sending the IMSI number and the KI number of the blank telecom smart card to a number opening unit by the air writing card control unit, and opening the corresponding numbers by the number opening unit; then, sending the IMSI number of the telecom smart card to the client device through a communication unit by the air writing card control unit;

mounting the blank telecom smart card into a mobile phone and inputting the IMSI number according to the prompt of mobile phone menu by user, and sending an activation information to the server through the blank telecom smart card; after the server receives the activation information, sending the personalized data to the blank telecom smart card by the air writing card control unit;

after the blank telecom smart card receives the personalized data, writing the personalized data to the corresponding location, and sending a feedback information indicating that the personalized data are written successfully to the server.

As can be seen from the above air writing card method, the air writing card system verifies the ID number of the blank telecom smart card sent by the client device through the server and performs the air writing card for the blank telecom smart card after the verification is passed. It is possible to perform writing card operation for the telecom smart card by using the air writing card system in areas at which the wireless network is provided, thus the operation cost of the writing card system is low and it is advantageous in spreading and application in remote areas.

In a preferable embodiment, the server sends the personalized data to the blank telecom smart card in the form of a transparent short message. In this way, the personalized data sent by the server will not be stored on the mobile phone, and the user cannot see the personalized data of the telecom smart card, thus insuring the privacy of the personalized data and improving the security of the writing card system.

### BRIEF DESCRIPTION OF THE DRAWINGS

Figure 1 is a schematic block diagram of structure of an existing long-range writing card system for a telecom smart card;

Figure 2 is a schematic block diagram of structure showing an embodiment of an air writing card system and an embodiment of a telecom smart card according to the present application being connected;

Figure 3 is a flowchart of an embodiment of an air writing card method according to the present application.

The present application will be further described in conjunction with the accompanying drawings and the embodiments hereinafter.

### DETAILED DESCRIPTION OF THE INVENTION

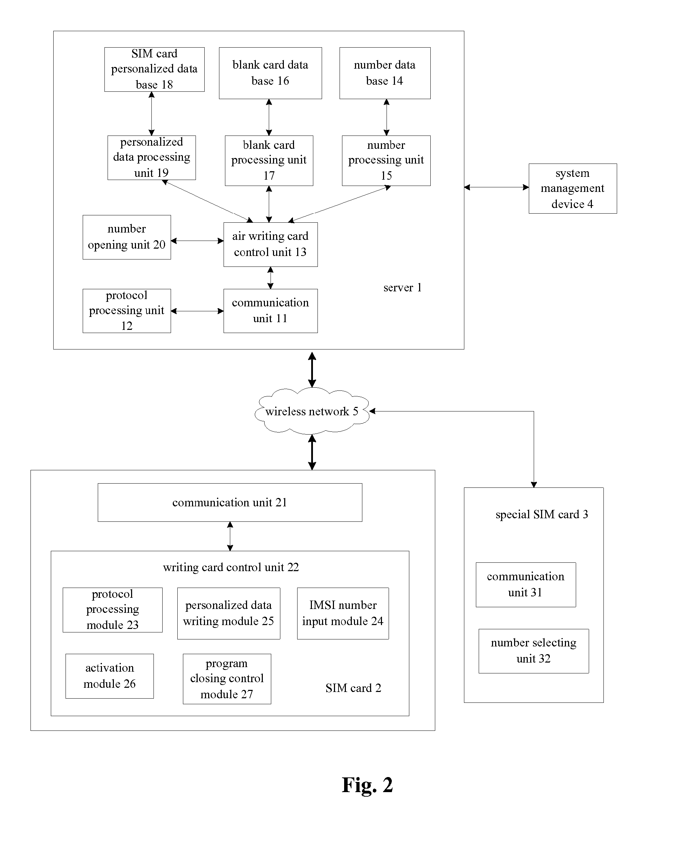

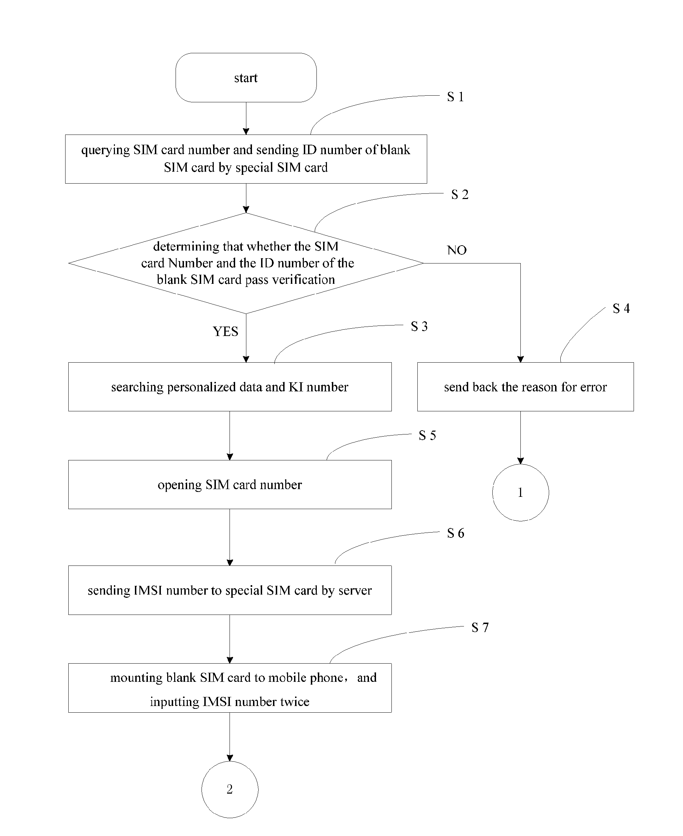

Referring to Figure 2, an air writing card system according to an embodiment of the present application has a server 1, the server 1 and a SIM card 2 as a telecom smart card and a special SIM card 3 achieve wireless communication through a wireless network 5, such as GSM network, the server 1 also exchanges information with a system management device 4 that manages the server 1. where as a client device of the present embodiment, a mobile phone carrying the special SIM card 3 is used for initiating a writing card request.

In the present embodiment, the SIM card 2 is a blank SIM card, that is a SIM card to which original data are written by the smart card manufacturer and which is not opened, the SIM card 2 stores the ID number and the KI number (network authorization data) thereof, each of the ID number and the KI number of the SIM card is uniquely set and there is a one-to-one correspondence. When the data are written to the blank SIM card 2, the blank SIM card 2 is desirable to be mounted into a mobile phone.

The SIM card 2 is provided with a communication unit 21 for exchanging information with the server 1 through the wireless network 5. The SIM card 2 is further provided with a writing card control unit 22 being able to receive information transmitted by the communication unit 21 and send information to the server 1 through the communication unit 21. The writing card control unit 22 is provided with a protocol processing module 23, an IMSI number input module 24, a personalized data writing module 25, an activation module 26 and a program closing control module 27.

The protocol processing module 23 is applied to perform a protocol matching processing for the information received or sent by the communication unit 21, that is to analyses, package the data structure according to public or private protocol, especially to analyses the received personalized data, so as to write the personalized data to a specific location, thus achieving the writing card operation of the SIM card 2.

The IMSI number input module 24 is applied to receive the IMSI number input by user manually, the personalized data writing module 25 is applied to receive the personalized data sent by the server 1 and write the personalized data to the SIM card 2. Preferably, the personalized data sent by the server 1 are encrypted data, and the personalized data writing module 25 includes a decryption program, which is used to perform a decryption processing for the received data.

The activation module 26 of the SIM card 2 sends an activation information to the server 1 after user inputs the IMSI number, so as to activate the SIM card 2. And the program closing control module 27 is applied to close the writing card flow after the personalized data are written to the SIM card 2 successfully and the SIM card 2 is opened, and bring the SIM card 2 into normal operation mode, so as to insure that once the SIM card 2 is written successfully, the personalized data cannot be rewritten.

The server 1 is provided with a communication unit 11, a protocol processing unit 12, an air writing card control unit 13, a number data base 14, a number processing unit 15, a blank card data base 16, a blank card processing unit 17, a SIM card personalized data base 18, a personalized data processing unit 19 and a number opening unit 20, where the communication unit 11 exchanges information with the SIM card 2 and the special SIM card 3 through the wireless network 5, and the protocol processing unit 12 is applied to perform protocol matching processing for the data sent and received by the communication unit 11, especially the sent personalized data.

The air writing card control unit 13 is the kernel module of the server 1 and is applied to process the air writing card flow, the processing includes receiving the information sent by the special SIM card 3 and the SIM card 2, receiving the writing card request and processing the writing card request information, sending the personalized data to the SIM card 2 and so on.

The number data base 14 of the server 1 stores the information of the SIM card number that can be opened, and exchanges information with the air writing card control unit 13 through the number processing unit 15, so as to manage the unopened SIM card number.

The blank card data base 16 stores the information of the blank SIM card, including the ID number, the KI number etc. of the unopened SIM card, and exchanges information with the air writing card control unit 13 through the blank card processing unit 17, so as to manage the ID number, the KI number of the SIM card, the management includes adding, deleting, querying and accounting the ID number of the unopened SIM card, and so on.

The SIM card personalized data base 18 stores the personalized data of the unopened SIM card, including IMSI number, ICCID number, PIN code, PIN2 code, PUK code, PUK2 code etc. of the SIM card. The SIM card personalized data base 18 exchanges data with the air writing card control unit 13 through the personalized data processing unit 19, so as to transmit the personalized data to the air writing card control unit, then the personalized data is sent to the special SIM card 3 or the SIM card 2 by the air writing card control unit 13.

The number opening unit 20 opens the SIM card number that is desirable to be opened, the opening process includes receiving the information transmitted by the air writing card control unit 13, and opening, activating the corresponding SIM card number after information verifying.

The air writing card system further includes the system management device 4 connected with the server 1, the system management device 4 manages the server 1, the management includes updating the data stored in the number data base 14, the blank card data base 16 and the SIM card personalized data base 18, upgrading and updating the protocol used by the protocol processing unit 12 and so on.

The mobile phone carrying the special SIM card 3 is the client device of the present embodiment, the SIM card 3 is provided with a communication unit 31 and a number selecting unit 32. The communication unit 31 exchanges information with the server 1 through the wireless network 5, while the number selecting unit 32 queries the unopened SIM card number in the server 1 through short message etc., so as to facilitate the user selecting number.

Of course, in practical application, the client device also can be a special computer or a special terminal in which a particular program is installed, such as a information machine, as long as it can exchange information with the server 1 and achieve the function of selecting, querying number and so on.

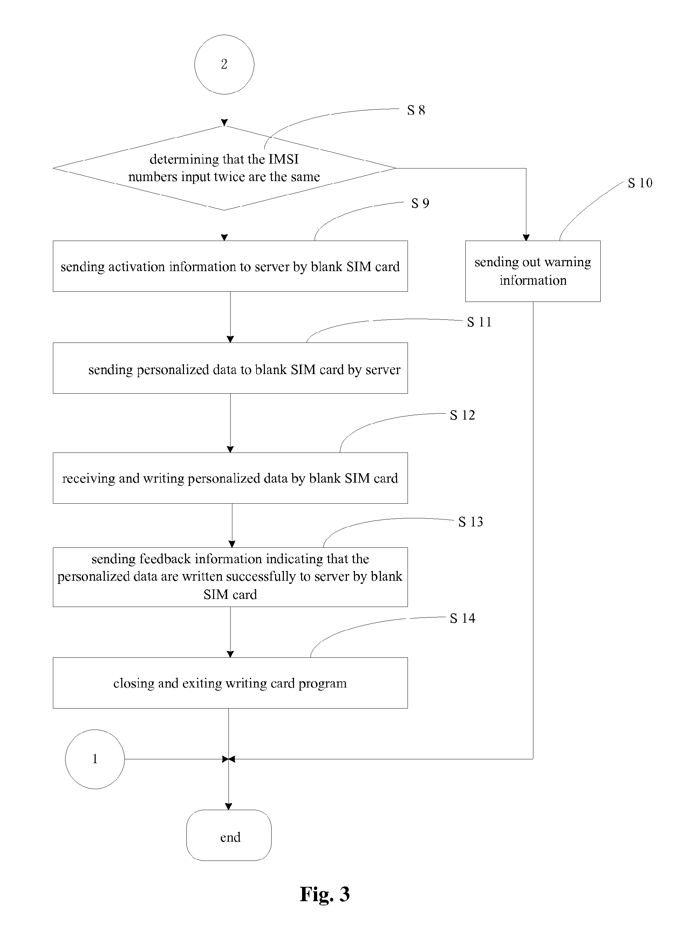

The flow of the air writing card system according to the present invention achieving air writing card will be described in conjunction with Figure 3 hereinafter.

Firstly, user uses the mobile phone carrying the special SIM card 3 to send a short message to the server 1 through the number selecting unit 32, so as to query a unopened SIM card number, and send the ID number of the blank SIM card 2 to the server as well through the special SIM card 3, that is performing the step S1. After the air writing card control unit 13 of the server 1 receives the SIM card number to be opened and the ID number of the blank SIM card 2, the step S2 is performed to verify the SIM card number and the ID number of the blank SIM card 2.

The air writing card control unit 13 queries the number data base 14 through the number processing unit 15 to determine that whether the SIM card number can be opened, and queries the blank card data base 16 to determine that whether the ID number of the blank SIM card 2 is correct. If the queried SIM card number or ID number of the blank SIM card 2 fails the verification, the step S4 is performed to send the reason for error back to the special SIM card 3, such as the SIM card number desirable to be opened has been opened, or the ID number of the blank SIM card 2 is not correct, and so on.

If the SIM card number and the ID number of the blank SIM card 2 pass verification, the air writing card control unit 13 extracts the KI number of the blank SIM card 2 from the blank card data base 16 through the ID number of the blank SIM card 2. Then, the step S3 is performed to search a personalized data in the SIM card personalized data base 18, the personalized data include IMSI number, ICCID number, PIN code, PIN2 code, PUK code, PUK2 code etc. of the blank SIM card 2.

After the air writing card control unit 13 finds the personalized data, the step S5 is performed to import the IMSI number and the KI number of the blank SIM card 2 to the number opening unit 20, so as to open the number of the blank SIM card 2. Then, the air writing card control unit 13 performs the step S6 to send the IMSI number of the blank SIM card 2 to the special SIM card 3 through the communication unit 11, the special SIM card 3 receives the IMSI number of the blank SIM card 2 and displays it.

Afterwards, user mounts the blank SIM card 2 on a mobile phone, then the mobile phone can enter the starting navigation menu, which will prompt user to input the IMSI number of the blank SIM card 2, that is performing the step S7. Preferably, the mobile phone prompts user to input the IMSI number twice and the step S8 is performed, in which the IMSI number input module 24 determines that whether the IMSI numbers input twice by user are the same, if the two IMSI numbers are different from each other, the step S10 is performed to send out a warning information and require user to re-input an IMSI number.

If the IMSI numbers input twice by user are the same, the blank SIM card 2 performs the step S9, in which the activation module 26 sends a activation information to the server 1 through the communication unit 21. After the air writing card control unit 13 of the server 1 receives the activation information, the step S11 is performed to send the personalized data of the blank SIM card 2 to the blank SIM card 2. Preferably, before sending the personalized data, the server 1 performs a encryption processing for the personalized data, and sends the personalized data to the blank SIM card 2 in the form of a transparent short message. Since the transparent short message only can be received by the blank SIM card 2 and will not be stored in the mobile phone, and can not cause any information displaying on the mobile phone, it is possible to improve the security of the writing card operation and avoid the disclosure of the personalized data of the blank SIM card 2.

The blank SIM card 2 performs the step S12 to receive the personalized data through the communication unit 21, the personalized data writing module 25 performs a decryption processing for the received personalized data and writes the personalized data to corresponding location according to the protocol matching principle of the protocol processing module 23, thus achieving the writing card operation of the blank SIM card 2.

After the writing card control unit 22 determines that the personalized data are written successfully, the activation module 26 performs the step S13 to send a feedback information indicating that the personalized data are written to the server 1 successfully through the communication unit 21, then the server 1 opens and activates the number of the blank SIM card 2. Finally, the blank SIM card 2 performs the step S14, in which the program closing control module 27 closes and exits the writing card program, that is closes the writing card control unit 22, so that the SIM card 2 enters the normal operation mode. In this way, once the personalized data of the SIM card 2 are written successfully, the SIM card 2 cannot enter the writing card flow to change the personalized data, thus insuring that the personalized data cannot be tampered and guaranteeing the security of the SIM card 2.

As can be seen from the above solution, by providing the SIM card 2 with the writing card control unit 22, the personalized data of the SIM card 2 can be written to the SIM card 2 through the air writing card system of the SIM card, thus achieving the air writing card of the SIM card 2. Moreover, in the solution of the present application, the writing card operation can be achieved only by providing the special SIM card 3 which is used as the client device as the auxiliary equipment, and the writing card device is not desirable to be provided, thus greatly reducing the cost of operation and maintenance of the writing card system.

Furthermore, in the present solution, the special SIM card 3 and the blank SIM card 2 exchange information with the server 1 both through the wireless network 5, in the remote areas without laying wired network, as long as the communication base station of the telecom operator is provided, the air writing card can be achieved by using the wireless network 5, thereby it is advantageous in spreading and application of the writing card system in remote areas.

Of course, the present application may have more changes in practical application, for example, the client device may be a special computer or other special equipments in which a particular program is installed, which are connected with the server 1 through wired network or wireless network and exchange information with the server 1; or alternatively, user sends personal information, such as the name, the identity card number of the user, to the server 1 through the special SIM card 3, thus achieving the real-name opening of the SIM card 2; or alternatively, air replacing or changing card of the SIM card 2 can be achieved by using the air writing card system, and so on, which will not affect the implementation of the present application.

Finally, it is emphasized that the present application is not limited to the above embodiments, minor changes, such as the change of the personalized data of the SIM card, the change of the communication protocol between the server and the SIM card, should also fall into the protection scopes of the present application.

## Claims

1. A telecom smart card comprising:
a communication unit (21);
wherein the telecom smart card further comprises a writing card control unit exchanging information with the communication unit (21), the writing card control unit comprises:
an IMSI number input module for receiving an IMSI number of the telecom smart card;
a personalized data writing module for receiving personalized data and writing the personalized data to the telecom smart card; and
an activation module for sending an activation information to the communication unit (21) according to the IMSI number input by the IMSI number input module.

2. The telecom smart card according to claim 1, wherein the writing card control unit further comprises a program closing control module applied to close a writing card program after it is determined that the telecom smart card is activated successfully.

3. The telecom smart card according to claim 1 or 2, wherein the writing card control unit further comprises a protocol processing module applied to perform a protocol matching processing for the information received or sent by the communication unit (21).

4. An air writing card system for writing data to the telecom smart card of claim 1 comprising:
a server;
a system management device communicating with the server;
a client device exchanging information with the server through a network; and
a mobile phone exchanging information with the server through a wireless network and carrying the telecom smart card;
wherein the server comprises:
a communication unit (11);
an air writing card control unit exchanging information with the communication unit (11);
a personalized data base storing telecom smart card personalized data, the personalized data base exchanges information with the air writing card control unit through a personalized data processing unit, and the air writing card control unit receives the personalized data and sends the personalized data;
a number data base storing telecom smart card numbers, the number data base exchanges information with the air writing card control unit through a number processing unit;
a blank card data base storing blank telecom smart card information, the blank card data base exchanges information with the air writing card control unit through a blank card processing unit; and
a number opening unit exchanging information with the air writing card control unit, number opening unit is applied to open the telecom smart card with the designated number according to the information provided by the blank card processing unit and the personalized data processing unit;
the client device comprises a communication unit (31) and a number selecting unit exchanging information with the communication unit (31).

5. The air writing card system according to claim 4, wherein the server is further provided with a protocol processing unit exchanging information with the communication unit (11), the protocol processing unit is applied to perform a protocol matching processing for the information received or sent by the communication unit (11).

6. The air writing card system according to claim 4 or 5, wherein the client device is a mobile phone carrying a special telecom smart card or a special computer or a special terminal.

7. A method for air writing to a telecom smart card by applying the air writing card system of claim 4 comprising:
sending a telecom smart card number desirable to be opened and the ID number of a blank telecom smart card to a server by a client device;
after an air writing card control unit of the server receives the telecom smart card number and the ID number of the blank telecom smart card, querying and verifying the validity of the telecom smart card number and the ID number of the blank telecom smart card to the number data base and the blank card data base;
after the telecom smart card number and the ID number of the blank telecom smart card pass verification, searching a personalized data comprising an IMSI number and the KI number of the blank telecom smart card in telecom smart card personalized data and sending the IMSI number and the KI number of the blank telecom smart card to a number opening unit by the air writing card control unit, and opening the corresponding numbers by the number opening unit;
sending the IMSI number of the telecom smart card to the client device through a communication unit (11) by the air writing card control unit;
after the blank telecom smart card is mounted into a mobile phone, inputting the IMSI number and sending a activation information to the server;
after the server receives the activation information, sending the personalized data to the blank telecom smart card by the air writing card control unit;
after the blank telecom smart card receives the personalized data, writing the personalized data, and sending a feedback information indicating that the personalized data are written successfully to the server.

8. The air writing card method according to claim 7, wherein after the personalized data are written, the blank telecom smart card closes writing card program and enters normal operation mode.

9. The air writing card method according to claim 7, wherein the server sends the personalized data to the blank telecom smart card in the form of a transparent short message.

10. The air writing card method according to any one of the claims 7 to 9, wherein the IMSI number is input two or more times, and the blank telecom smart card determines that whether the IMSI numbers input multiple times are the same, if the IMSI numbers are different from each other, a warning information is sent out.
